# EUROPEAN PATENT APPLICATION

(11) **EP 1 170 948 A2**
(43) Date of publication of application: **09.01.2002**
(21) Application number: 01115675.9
(22) Date of filing: 04.07.2001
(51) Int. Cl.: H04N 7/14

(54) **Radio communication apparatus**

(30) Priority: 05.07.2000 JP 2000204101
(71) Applicant: Kabushiki Kaisha Toshiba, Tokyo 105-8001 (JP)
(72) Inventor: Ito, Koichi, Intellectual Property Division, Minato-ku, Tokyo 105-8001 (JP); Shimizu, Kazuo, Intellectual Property Division, Minato-ku, Tokyo 105-8001 (JP)
(74) Representative: HOFFMANN - EITLE

(57) **Abstract**

A radio communication apparatus having a videophone function and a usual phone function, according to the present invention, incorporates a camera (10) for inputting an image to realize the videophone function, and an encoding section (9) for encoding an image signal output from the camera (10). It also incorporates a decoding section (8) for decoding a received image signal input via a radio section (2) and displaying it on a display screen section (11). A controller (5) limits the encoding of the image signal in the encoding section (9), when necessary, in order to limit the consumption of power, and also limits the decoding of the image signal in the decoding section (8). Thus, the invention provides a radio communication apparatus with a videophone function, capable of encoding and displaying, only when necessary during a videophone call, an image signal transmitted from another radio communication apparatus, thereby minimizing the consumption of power per unit of time.

## Description

The present invention relates to a radio communication apparatus having a videophone function for enabling videophone communication, and more particularly to the control processing for transmitting and receiving image data.

In the field of a radio communication apparatus equipped with an image display such as a liquid crystal display, a radio communication apparatus having a videophone function for displaying not only still images such as characters or still pictures, etc., but also moving video images or moving pictures, etc., i.e. a so-called videophone, has been recently developed and come onto the market.

When the radio communication apparatus having the videophone function executes videophone communication, an image transmitted from a person called is continuously displayed until the call finishes, even if the image does not have to be displayed for users. While such an image is being displayed, the circuits for decoding and displaying a received image signal have to be kept operating. The videophone communication in which the circuits for decoding and displaying the received image signal are kept operating consumes much more power than communication using only sound.

In particular, when a radio communication apparatus using an isolated power section such as a battery executes a videophone call, the heavy consumption of power is a serious problem. Since the radio communication apparatuses use a battery as a power supply, its maximum call period and standby period may be very short.

It is an object of the present invention to provide a radio communication apparatus having a videophone function and capable of decoding and displaying an image signal transmitted from a person called only when necessary during videophone communication, thereby reducing the consumption of power per unit of time.

It is another object of the present invention to provide a radio communication apparatus having a videophone function and capable of stopping decoding a received image signal when a still image has been created by key operation.

It is yet another object of the present invention to provide a compact radio communication apparatus having a videophone function and capable of controlling a received image signal decoding section so as to decode the signal within a necessary range, and stopping the received image signal decoding section during a usual signal receiving operation, thereby minimizing the amount of heat generated from the radio communication apparatus.

According to a first aspect of the present invention, there is provided a radio communication apparatus comprising:
receiving section configured to receive a radio signal containing a voice signal and an image signal and demodulate the voice signal and the image signal;
converting section configured to receive the demodulated image signal from the receiving section and decode the demodulated image signal; and
control section configured to stop decoding the demodulated image signal that is supplied from the receiving section to the converting section during communication.

According to a second aspect of the invention, there is provided a radio communication apparatus comprising:
receiving section configured to receive a radio signal containing a voice signal and an image signal and demodulate the voice signal and the image signal;
converting section configured to receive the demodulated image signal from the receiving section and decode the demodulated image signal;
control section configured to turn on and off the converting section so as to stop decoding the demodulated image signal that is supplied from the receiving section to the conversion section during communication;
timer section configured to measure a predetermined period of time for which the image signal is output to the converting section, if the image signal is a moving picture signal; and
memory section configured to store the image signal decoded by the converting section and prestore an image signal obtained beforehand.

According to a third aspect of the invention, there is provided a radio communication apparatus comprising:
receiving section configured to receive a radio signal containing a voice signal and an image signal and demodulate the voice signal and the image signal;
converting section configured to receive the demodulated image signal from the receiving section and decode the demodulated image signal;
control section configured to turn on and off the conversion section so as to stop decoding the demodulated image signal that is supplied from the receiving section to the converting section during communication; and
memory section configured to store the image signal decoded by the converting section and prestore an image signal obtained beforehand.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a conceptual view illustrating a system including radio communication apparatuses according to a first embodiment of the present invention;
FIG. 2 is a block diagram illustrating the internal electrical structure of each radio communication apparatus of FIG. 1;
FIG. 3 is a flowchart useful in explaining the operation of each of the radio communication apparatus described the first embodiment and a radio communication apparatuses according to a second embodiment, which is executed to decode and display an image signal received for a predetermined time period after the start of videophone communication, and to display an image stored in the apparatus after the predetermined time period elapses;
FIG. 4 is a flowchart for illustrating in detail the process executed at step ST6 shown in FIG. 3; and
FIG. 5 is a flowchart useful in explaining the operation of a radio communication apparatus according to a third embodiment of the invention, which is executed to decode and display, during videophone communication, an image signal received as long as key input operation is executed for requesting the display of the image signal, and to display an image stored in the apparatus if there is no such key input operation.

Radio communication apparatuses according to the embodiments of the present invention will be described with reference to the accompanying drawings.

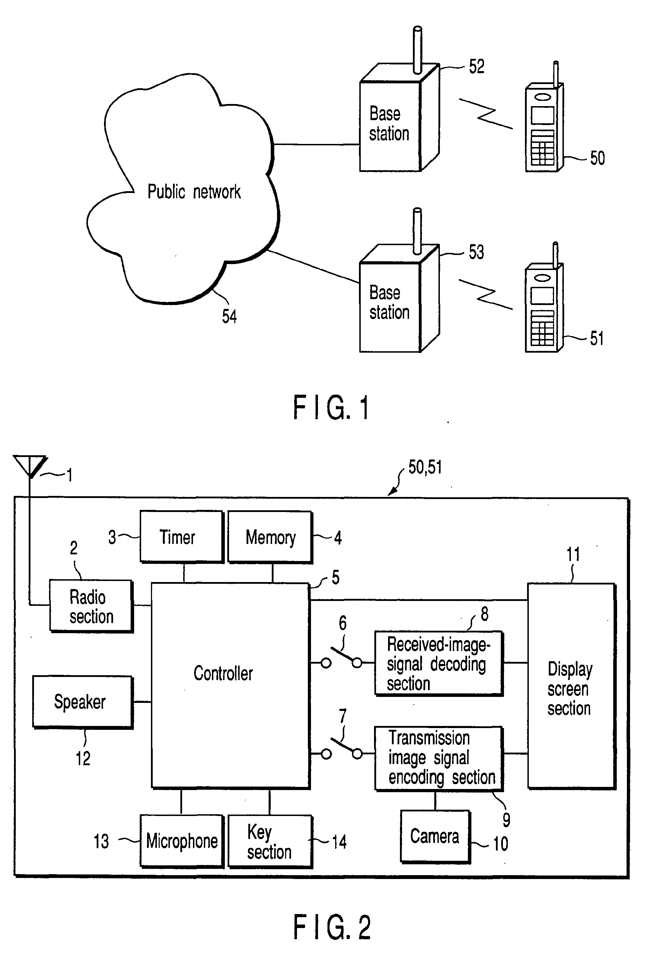

FIGS. 1 - 3 show radio communication apparatuses with a videophone function according to a first embodiment. FIG. 1 shows a communication system including the radio communication apparatuses with the videophone functions according to the first embodiment. As is seen from FIG. 1, radio communication apparatuses 50 and 51 having the videophone function are connected to a public network 54 via base stations 52 and 53, respectively. The base stations 52 and 53 respectively provide the radio communication apparatuses 50 and 51 with respective service areas dedicated to the base stations 52 and 53. In other words, the base station that is located closest to each radio communication apparatus 50 or 51 and hence can receive the radio waves of each radio communication apparatus in a best condition is designated as the base station 52 or 53. The public network 54 is connected to a plurality of base stations located in various areas, and can communicate with a radio communication apparatus located even at a long distance via an appropriate base station.

FIG. 2 is a block diagram illustrating the internal structure of each radio communication apparatus 50 or 51 with the videophone function according to the invention.

As shown in FIG. 2, each of the radio communication apparatuses 50 and 51 has a radio section 2 for transmitting and receiving radio waves to and from a corresponding one of the base stations 52 and 53. The radio section 2 is connected to an antenna 1 and receives radio waves through the antenna 1. The antenna 1 converts a received radio wave into a received signal. The radio section 2 subjects the received signal to high frequency amplification and frequency conversion, thereby amplifying low noise contained in the signal. A controller 5 generates a designation signal for designating a frequency and supplies the designation signal to the radio section 2. On the basis of the designation signal, the radio section 2 converts the received signal, by frequency conversion, into an intermediate-frequency signal or a baseband signal, and demodulates the converted signal into a digital signal.

The controller 5 executes control for establishing a communication channel based on a communication protocol. Upon establishing the communication channel, the controller 5 generates a call sound generating signal. A sounder (not shown) outputs the call sound generating signal, thereby informing the user of an incoming call. The user can also be notified about the incoming call by vibrating a vibrator (not shown) or turning on an LED (not shown), instead of generating the call sound.

A call control section (not shown) receives the received signal from the radio section 2 over the communication channel. When, after that, a prescribed key in a key section 14 has been pushed to establish communication, the call control section converts the demodulated signal into a speaker signal. A speaker section 12 receives the speaker signal and outputs a sound corresponding to the speaker signal.

When the apparatus transmits radio waves containing voice information through the antenna 1, the operation of the key section 14 incorporated in each radio communication apparatus 50 or 51 generates an ON signal for turning on the apparatus called (50 or 51). The controller 5 receives the ON signal and turns on the corresponding apparatus (50 or 51). After that, a phone number assigned to another radio communication apparatus to communicate with is input by operating the key section 14, thereby generating a number signal corresponding to the phone number. The controller 5 receives the number signal and creates a radio control signal based on the number signal. The radio section 2 receives the radio control signal and encodes the phone number. Radio waves containing the encoded phone number are output through the antenna 1. When the apparatus transmits a signal, the controller 5 controls the communication protocol to establish a communication channel. After that, incoming call radio waves are transmitted to the radio communication apparatus with the phone number via the base station 52, the public network 54 and the base station 53. In this state, the radio communication apparatuses 50 and 51 are communicable. In the communicable state, a voice input to a microphone 13 is converted into a voice signal and input to a call control section (not shown), where the input signal is digitally modulated.

At the time of receiving image data, at first, the communication channel is established as described above. The controller 5 detects a received signal. If the received signal contains the image data, the controller 5 establishes an interface for processing image data. Upon establishing the interface, the controller 5 outputs a digital signal containing the image data to a received-image-signal decoding section 8 via a decoding switch 6. The decoding switch 6 controls the output of an image signal from the controller 5 to the received-image-signal decoding section 8. Specifically, if the decoding switch 6 is in the ON state, the output of the image signal to the received-image-signal decoding section 8 is permitted, while if the decoding switch 6 is in the OFF state, the output of the image signal to the section 8 is interrupted. This means that the decoding switch 6 has a function of interrupting the decoding of the image signal in the received-image-signal decoding section 8. That is, if the decoding switch 6 is in the ON state, the received signal is decoded by the received-image-signal decoding section 8, and if it is turned off, the decoding of the received signal by the section 8 is interrupted.

The received-image-signal decoding section 8 decodes the image signal and then subjects the decoded image signal to D/A conversion, thereby converting the decoded image signal into an analog image signal. A display screen section 11 receives the analog image signal and displays an image based on the image data contained in the analog image signal.

When the apparatus transmits image data, a camera 10 picks up an image and converts the image into an image signal. In place of the camera 10, the image signal may be input to the apparatus via an image input terminal connected to an image input device such as a video recorder. A transmission image signal encoding section 9 encodes the image signal and converts the encoded image signal into a digital image signal containing the image data. The resultant signal is output to the controller 5 under the control of an encoding switch 7. If the encoding switch 7 is in the ON state, the encoding of the image signal by the transmission image signal encoding section 9 is continued, and the output of the image signal to the controller 5 is permitted. On the other hand, if the encoding switch 7 is turned off, the encoding of the image signal by the section 9 and the output of the image signal to the controller 5 are both interrupted. The radio section 2 modulates the image signal and transmits the modulated image signal from the antenna 1. On transmission, the communication channel is established as aforementioned. As aforementioned, the encoding switch 7 controls the transmission image signal encoding section 9, by on or off switching, so as to reduce the power consumption of the section 9.

Each radio communication apparatus 50 or 51 includes a memory 4 for storing phone numbers, an incoming call history, image data and voice data, etc. Further, each radio communication apparatus 50 or 51 also includes a timer 3 for monitoring the time period for displaying a received image during the execution of the videophone function. An image signal received for a predetermined time period after the start of a call is decoded and the image corresponding to the decoded image signal is displayed on the display screen section 11. After the predetermined time period elapses, an image stored in the memory 4 is displayed on the display screen section 11. The image stored in the memory 4 can be selected, by the user's operation of the key section 14, from image data transmitted, during the call, from the radio communication apparatus called. Further, any voluntarily selected images may be stored in the memory 4 beforehand and displayed when necessary. An image previously stored in the memory 4 may be displayed. Also, an image received from an image forming apparatus, such as a video recorder, a digital camera or a personal computer, connected to the input terminal (not shown) of the radio communication apparatus may be displayed. Moreover, the radio communication apparatus may be programmed such that if the key section 14 is operated during the call to request the display of an image signal that is now being received, the received image signal is decoded and displayed, while if the key section 14 is not operated, an image stored in the radio communication apparatus is displayed. Thus, the image to be displayed can be voluntarily selected by the user's operation of the key section 14.

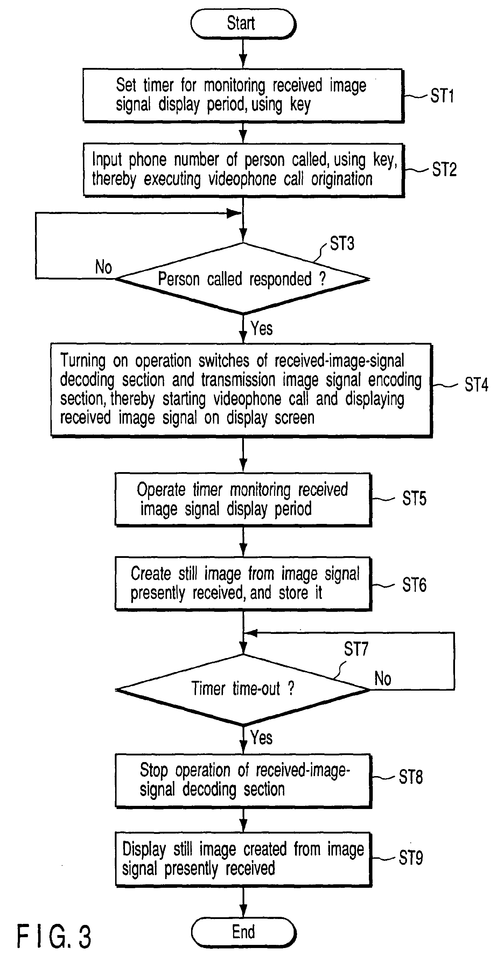

Referring now to the flowchart of FIG. 3, a description will be given, which is the operation of decoding and displaying, under the control of the controller 5, an image signal received for a predetermined time period after the start of the execution of the videophone function, and displaying an image stored in the radio communication apparatus after the predetermined period elapses.

First, when the radio communication apparatus 50 or 51 is waiting for to-be-received radio waves, the time period for displaying an image received during a videophone call is set in the timer 3 shown in FIG. 2, using the key section 14 shown in FIG. 2 (step ST1 in FIG. 3). Subsequently, the key section 14 is operated to input a phone number into the radio communication apparatus 50 or 51. As a result, a videophone call origination is generated (step ST2 in FIG. 3). Then, the radio communication apparatus 50 or 51 waits for a response from the radio communication apparatus called (step ST3 in FIG. 3).

When starting communication between apparatuses, the switches 6 and 7 shown in FIG. 2 are turned on, thereby operating the received-image-signal decoding section 8 and the transmission image signal encoding section 9. As a result, videophone communication for transmitting and receiving image and voice signals starts (step ST4 in FIG. 3). After that, the timer 3 shown in FIG. 2 is operated to monitor the predetermined time period for displaying the image signal received during the execution of the videophone function (step ST5 in FIG. 3).

A still image is extracted from the received image signal and stored in the memory 4 shown in FIG. 2, under the control of the controller 5 (step ST6 in FIG. 3). Subsequently, it is determined whether or not the predetermined time period for displaying a received image during the videophone call has elapsed (step ST7 in FIG. 3). The predetermined time was set while the radio communication apparatus was in the standby state. After the predetermined time period elapses, the switch 6 shown in FIG. 2 is turned off to thereby stop the operation of the received-image-signal decoding section 8 (step ST8 in FIG. 3). At this time, a still image extracted from the received image stored in the memory 4 shown in FIG. 2 is displayed on the display screen section 11 (step ST9 in FIG. 3).

After a still image is displayed by operating the radio communication apparatus 50 or 51 as described above, the current consumption of the received-image-signal decoding section 8 is reduced, thereby minimizing a reduction in the capacity of the battery due to the decoding of the received image signal. Furthermore, since a still image is displayed while image decoding is being stopped, the user does not have to worry about whether or not the decoding function is a breakdown when the image decoding is stopped. It is sufficient if the to-be-displayed image is any one of the images stored in the radio communication apparatus, and is not necessarily an image extracted from a received image signal. For example, a prestored picture of a person to communicate with may be displayed, using an address book function. Alternatively, a particular icon or a message indicating that a videophone call is now being executed may be displayed, or an illustration preselected by the user may be displayed. Thus, the to-be-displayed image can be voluntarily selected and is not limited to the above.

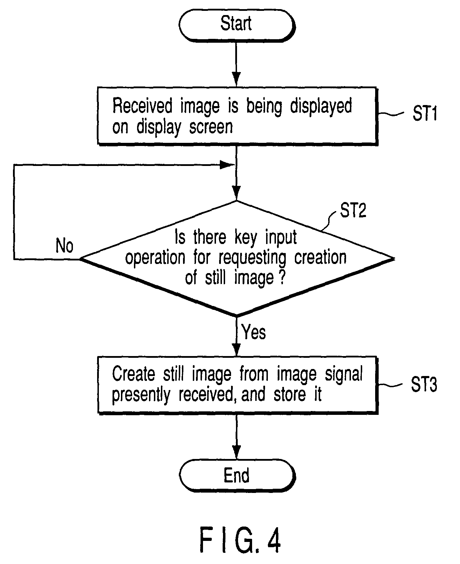

Referring then to FIGS. 3 and 4, a second embodiment of the invention will be described. FIG. 4 is a flowchart useful in explaining in detail the step ST6 shown in FIG. 3.

A description of a method, employed in the step ST6 of FIG. 3, for creating a still image from a received image signal will be given. There is a method for creating a still image from a received image signal at random. However, in this method, it is possible that a desired image will not be obtained. For example, a still image may be extracted when the face of a person called is offscreen. In this case, the face of a person is not included in the still image.

To avoid such a case, there is a method for enabling the user to create a desired still image. This method is illustrated in FIG. 4.

In the flowchart of FIG. 4, at first, a received image signal is decoded (step ST1 in FIG. 4), and a standby state for waiting for a key input operation to request the creation of a still image is maintained (step ST2 in FIG. 4). In this standby state, if the key input operation is detected, a still image is created. Accordingly, it become rare that when the face of a person called is offscreen, a still image on the screen is extracted (step ST3 in FIG. 4). Further, the timer 3 for monitoring the time period for displaying a receiving image signal during a videophone call may be set to stop its time measuring when the key for requesting a still image has been pushed, so as to stop the decoding of the receiving image signal when a still image has been created as a result of the key input operation.

The above embodiment can be modified so that transmission of image data to a radio communication apparatus as a destination is stopped, in addition to the stoppage of the decoding of the received image signal, after the predetermined time period for displaying a received image signal during a videophone call elapses. Specifically, the transmission of an image signal can be also stopped by turning off, at the step ST9 in FIG. 3, the encoding switch 7 for controlling the operation of the transmission image signal encoding section 9 shown in FIG. 2. As a result, the radio communication apparatus as the destination can further reduce its current consumption, although the apparatus shows no images on the screen. Further, if the radio communication apparatus as the destination employs a memory as described above, it can display a still image stored in the memory 4.

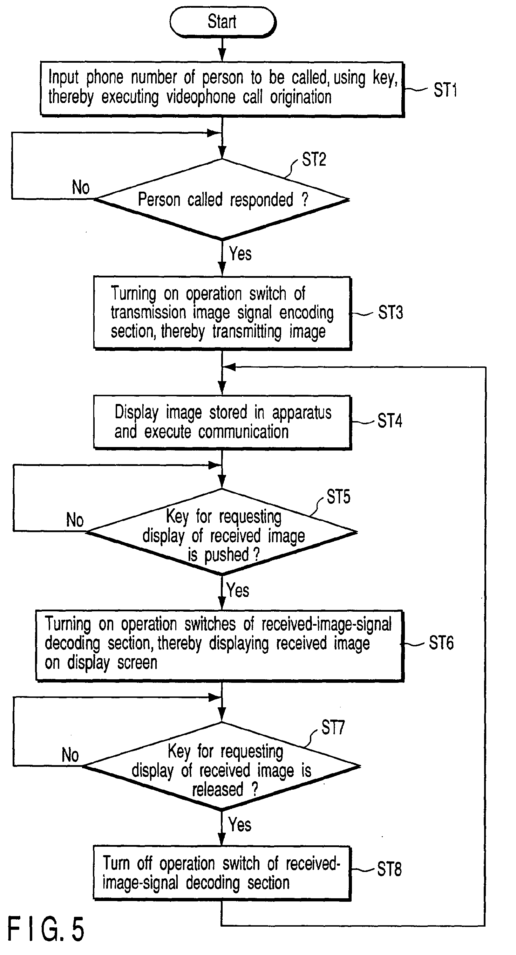

Referring to FIG. 5, a third embodiment of the present invention will be described. FIG. 5 is a flowchart useful in explaining the operation of decoding and displaying a received image signal only while the key input operation of requesting display of a received image signal is being executed during a videophone call, and displaying an image stored in the apparatus if there is no key input operation.

First, when the radio communication apparatus 50 or 51 is waiting for to-be-received radio waves, a phone number is input to generate a videophone call origination (step ST1 in FIG. 5). Then, the radio communication apparatus 50 or 51 waits for a response to the call from a radio communication apparatus as a destination (step ST2 in FIG. 5). When starting communication, the switch 7 shown in FIG. 2 is turned on, thereby operating the transmission image signal encoding section 9. As a result, an image is transmitted to the radio communication apparatus as the destination and videophone communication starts (step ST3 in FIG. 5). Further, an image stored in the apparatus is displayed on the display screen section 11 shown in FIG. 2 (step ST4 in FIG. 5). In this state, the key input operation for requesting display of a receiving image is waited for (step ST5 in FIG. 5).

When the key input operation has been executed, the switch 6 shown in FIG. 2 is turned on, thereby operating the received-image-signal decoding section 8, thereby decoding a signal received and displaying an image of the decoded signal on the display screen section 11 (step ST6 in FIG. 5). After that, termination of the key input operation of requesting the display of a received image is waited for (step ST7 in FIG. 5). After the key input operation is terminated, the switch 6 is turned off to stop the received-image-signal decoding section 8, followed by the program returning to the step ST4 (step ST8 in FIG. 5).

The above-described operations enable a received image to be displayed only when a request for displaying the received image has been issued, and enable the received-image-signal decoding section 8 to be stopped if there is no such request. Accordingly, when there is no such request, the received-image-signal decoding section 8 does not consume power, and hence less power is consumed from the battery of the radio communication apparatus 50 or 51. Furthermore, when no received image is displayed, an image stored in the apparatus is displayed. Accordingly, the user does not have to worry about whether or not the decoding function is a breakdown when the image decoding is stopped.

This embodiment can be also modified such that an image can be displayed for a predetermined time period after a key input operation is executed. If the above-described two methods are combined, the current consumption of the radio communication apparatus can be further reduced.

The present invention can be modified in various ways without deviation from the gist. For example, the invention may be modified such that the manner of communication can be switched between videophone communication and usual phone communication using only sound by pushing one key repeatedly.

As described above, in the embodiments, a circuit for decoding a received image signal is operated when necessary during a videophone call, thereby decoding and displaying the received image signal. When the circuit is not operated, it does not consume power. Accordingly, the power consumption of the entire apparatus is less than that of an apparatus in which a received image signal is always decoded and displayed.

If this structure is employed in a radio communication apparatus to be operated by a battery, such as a mobile phone, the power consumption of the battery can be suppressed since a received image is displayed only for a necessary period during a videophone call. This means that the duration of a call and the duration of standby obtained by one battery charge can be lengthened.

Moreover, since image decoding is not executed more than necessary and hence the operation of the circuit for decoding images is minimized, the heat generated from the radio communication apparatus can be reduced and the apparatus can be made compact.

## Claims

1. A radio communication apparatus **characterized by** comprising:
receiving section (2) configured to receive a radio signal containing a voice signal and an image signal and demodulate said voice signal and said image signal;
converting section (8) configured to receive said demodulated image signal from said receiving section (2) and decode said demodulated image signal; and
control section (5, 6, 8) configured to stop decoding said demodulated image signal that is supplied from said receiving section (2) to said converting section (8) during communication.

2. Said radio communication apparatus according to claim 1, **characterized in that** said control section (5, 6, 8) includes switch section (6) configured to turn on and off said converting section (8).

3. Said radio communication apparatus according to claim 1, **characterized in that** said image signal contains information on a moving picture and a still image, said moving picture consisting of a predetermined number of still images displayed repetitively per unit of time.

4. Said radio communication apparatus according to claim 3, **characterized in that** said moving picture is displayed at a speed higher than 1 frame per unit of time.

5. Said radio communication apparatus according to claim 1, **characterized by** further comprising timer section (3) configured to measure a predetermined period of time for which said image signal is output to said converting section (8), if said image signal is a moving picture signal.

6. Said radio communication apparatus according to claim 1, **characterized by** further comprising memory section (4) configured to store said image signal decoded by said converting section (8).

7. Said radio communication apparatus according to claim 6, **characterized in that** said memory section (4) also prestores an image signal.

8. Said radio communication apparatus according to claim 7, **characterized in that** said image signal prestored in said memory section (4) is converted into a decoded image signal by said converting section (8) on said basis of an instruction from a user, and an image based on said converted image signal is displayed.

9. Said radio communication apparatus according to claim 6, **characterized in that** said control section (5, 6, 8) includes:
still image extracting section (8) configured to extract a still image signal from said image signal if said image signal is a moving picture signal; and
supply section (5) configured to supply said still image signal to said memory section (4).

10. Said radio communication apparatus according to claim 6, **characterized in that** said control section (5, 6, 8) includes output switch section (5) configured to switch an output mode between an output mode for outputting only said voice signal and an output mode for outputting both said voice signal and said image signal.

11. Said radio communication apparatus according to claim 6, **characterized in that** said control section (5, 6, 8) includes image signal supply section (5) configured to switch said image signal, decoded by said converting section (8), into an image signal having a smaller amount of data.

12. A radio communication apparatus **characterized by** comprising:
receiving section (2) configured to receive a radio signal containing a voice signal and an image signal and demodulate said voice signal and said image signal;
converting section (8) configured to receive said demodulated image signal from said receiving section (2) and decode said demodulated image signal;
control section (5, 6, 8) configured to turn on and off said converting section (8) so as to stop decoding said demodulated image signal that is supplied from said receiving section (2) to said converting section (8) during communication;
timer section (3) configured to measure a predetermined period of time for which said image signal is output to said converting section (8), if said image signal is a moving picture signal; and
memory section (4) configured to store said image signal decoded by said converting section (8) and prestore an image signal obtained beforehand.

13. Said radio communication apparatus according to claim 12, **characterized in that** said control section (5, 6, 8) includes:
still image extracting section (8) configured to extract a still image signal from said image signal if said image signal is a moving picture signal; and
supply section (5) configured to supply said still image signal to said memory section (4).

14. Said radio communication apparatus according to claim 12, **characterized in that** said control section (5, 6, 8) includes image signal supply section (5) configured to switch said image signal, decoded by said conversion section (8), into an image signal having a smaller amount of data.

15. A radio communication apparatus **characterized by** comprising:
receiving section (2) configured to receive a radio signal containing a voice signal and an image signal and demodulate said voice signal and said image signal;
converting section (8) configured to receive said demodulated image signal from said receiving section (2) and decode said demodulated image signal;
control section (5, 6, 8) configured to turn on and off said conversion section (8) so as to stop decoding said demodulated image signal that is supplied from said receiving section (2) to said converting section (8) during communication; and
memory section (4) configured to store said image signal decoded by said converting section (8) and prestore an image signal obtained beforehand.

16. Said radio communication apparatus according to claim 15, **characterized in that** said control section (5, 6, 8) includes:
still image extracting section (8) configured to extract a still image signal from said image signal if said image signal is a moving picture signal; and
supply section (5) configured to supply said still image signal to said memory section (4).

17. Said radio communication apparatus according to claim 15, **characterized in that** said control section (5, 6, 8) includes image signal supply section (5) configured to switch said image signal, decoded by said converting section (8), into an image signal having a smaller amount of data.
